# EUROPÄISCHE PATENTSCHRIFT

(11) **EP 3 341 252 B1**
(45) Veröffentlichungstag und Bekanntmachung des Hinweises auf die Patenterteilung: **07.08.2019**
(21) Anmeldenummer: 16731890.6
(22) Anmeldetag: 23.06.2016
(51) Int. Cl.: B60T 11/16

(54) **HYDRAULISCHES AGGREGAT ZUM ERZEUGEN VON BREMSDRUCK FÜR EINE KRAFTFAHRZEUG-BREMSANLAGE**
HYDRAULIC UNIT FOR PRODUCING BRAKE PRESSURE FOR A MOTOR-VEHICLE BRAKE SYSTEM
GROUPE HYDRAULIQUE POUR LA PRODUCTION D'UNE PRESSION DE FREINAGE POUR UN SYSTÈME DE FREINAGE D'UN VÉHICULE AUTOMOBILE

(30) Priorität: 30.06.2015 DE 102015212254
(43) Veröffentlichungstag der Anmeldung: 04.07.2018
(73) Patentinhaber: Continental Teves AG & Co. OHG, 60488 Frankfurt am Main (DE)
(72) Erfinder: BRANDT, Lothar, 38518 Gifhorn (DE); CICHY, Mike, Candler, North Carolina 28715 (US); KLEIN, Björn, 60433 Frankfurt am Main (DE); LOKE, Jörg, 65611 Brechen (DE); SARAC, Erkan, 61209 Echzell (DE)
(86) Internationale Anmeldenummer: PCT/EP2016/064558
(87) Internationale Veröffentlichungsnummer: WO 2017/001282

(56) Entgegenhaltungen:
- WO-A1-2004/089714
- DE-A1-102012 203 099
- DE-A1-102014 201 699

## Beschreibung

Die Erfindung bezieht sich auf ein hydraulisches Aggregat zum Erzeugen von Bremsdruck für eine hydraulische Kraftfahrzeugbremsanlage, insbesondere einen Hauptbremszylinder mit den Merkmalen nach dem Oberbegriff des Anspruch 1, sowie ein Verfahren zur Herstellung von Bohrungsabschnitten mit einem Solldurchmesser in einem Hohlraum des hydraulischen Aggregats.

Derartige hydraulische Aggregate sind weit und in vielfältigen Ausprägungen verbreitet. Insbesondere Hauptbremszylinder verschiedener Art verfügen über einen Hohlraum, der meist als eine Sackbohrung ausgeführt ist, in der ein oder mehrere Zylinderkolben axial verschoben werden, die in dem Hohlraum ein oder mehrere mit Druckflüssigkeit gefüllte Druckkammern begrenzt sind, in denen aufgrund der Kolbenverschiebung Bremsdruck erzeugt wird.

Zum einschlägigen Stand der Technik wird hierbei beispielhaft auf einen Hauptbremszylinder gemäß WO 2004/089714 A1 verwiesen.

Um eine ordnungsgemäße Funktion des Aggregats zu gewährleisten muss der Hohlraum über zumindest einen Bohrungsabschnitt mit einem definiert tolerierten Solldurchmesser verfügen, in welchen der Zylinderkolben abgedichtet versetzt wird. Des Weiteren muss die Innenwandung des Hohlraums für eine vorgesehene Dauerhaltbarkeit zumindest in Abschnitten, an denen ein Dichtelement ableitet und/oder die mit dem Kolben zumindest zeitweise in Kontakt treten, eine definierte Mindesthärte sowie Oberflächengüte aufweisen, um Verschleiß und Reibkräfte zu reduzieren.

Bei den meisten derartigen hydraulischen Aggregaten ist der Hohlraum in einen Hauptkörper aus einer Aluminiumlegierung eingebracht, die eine relativ geringe Härte aufweist.

Zur Sicherstellung der vorgenannten Anforderungen an den oder die betroffenen Bohrungsabschnitte im Hohlraum ist es bekannt, die Hohlraum als eine Sackbohrung auszubilden und mit spanabhebenden Fertigungsverfahren - beispielsweise durch Bohren oder Fräsen zunächst mit einem Vorbohrdurchmesser zu versehen, der kleiner als der Solldurchmesser ist. Nachfolgend wird der Vorbohrdurchmesser ebenfalls spanabhebend durch Reiben oder Honen vergrößert auf den Solldurchmesser vergrö-ßert, dabei werden die durch die vorherige spanende Bearbeitung entstandenen Spitzen, Wellen und Gräte in der Oberfläche abgeschabt und so die Rautiefe und Rauheit der Innenwandung verringert. Nachfolgend wird der Hohlraum oder der gesamte Hauptkörper elektrochemisch mit einer gesonderten Schutzschicht versehen - beispielsweise anodisiert bzw. eloxiert. Nach den einzelnen Prozessschritten muss der Hauptkörper immer wieder gewaschen oder gereinigt werden, um die Späne, Kühlschmierstoffe oder Elektrolyten zu entfernen.

Die Herstellung der bekannten Aggregate wird in Bezug auf den Aufwand und die Kosten als verbesserungswürdig empfunden, zudem kann eine Innenwandung des Hohlraums, bedingt durch die Herstellmethode des Hauptkörpers - meist Gießverfahren - Lunker aufweisen, welche durch die nachfolgenden aufwändigen Kontrollmaßnahmen erkannt werden müssen und gegebenenfalls den Ausschuss erhöhen oder zu kostspieligen Nacharbeit führen.

Die Erfindung beruht somit auf der Aufgabe, ein gattungsgemäßes hydraulisches Aggregat anzubieten, dessen Herstellung effektiver und kostengünstiger gestaltet ist und die technischen Anforderungen dennoch erfüllt bleiben.

Die Aufgabe wird erfindungsgemäß durch ein hydraulisches Aggregat mit der Merkmalskombination nach dem Anspruch 1 gelöst. Unteransprüche zusammen mit Figurenbeschreibungen geben weitere vorteilhafte Ausführungen und Weiterbildungen der Erfindung an.

Die Erfindung sieht vor, dass der Werkstoff des Hauptkörpers in einer Randschicht einer Innenwandung des Hohlraums im Bohrungsabschnitt ein umformtechnisch verfestigtes Werkstoffgefüge aufweist.

Der Bohrungsabschnitt eines derart erfindungsgemäß bearbeiteten Aggregats weist eine Innenwandung mit einer umformtechnisch gehärteten und geglätteten Oberfläche mit einer verbesserten Oberflächenqualität und verringerten Toleranzen auf. Das Werkstoffgefüge in einem oberflächennahen Bereich wird zudem homogenisiert und verdichtet, die Spuren der spanabhebenden Verfahren wie die Bearbeitungsspitzen oder Wellen werden eliminiert und/oder geglättet. Die ausgeprägte Randschichtfestigkeit aufgrund der Verdichtung von Werkstoffgefüge ermöglicht ein besseres Verschleißverhalten und somit eine verbesserte Dauerhaltbarkeit, ohne dass Abbringen einer zusätzlichen gesonderten Schutzschicht erforderlich ist und ohne dass chemisch aggressive Medien im Herstellungsprozess verwendet werden müssen. Das Ablösen einer Schutzschicht ist ist mangels dieser nicht möglich.

Durch die umformtechnische Verdichtung der Oberfläche werden die etwaigen Lunker kollabiert und so in ihrer Anzahl und Volumen reduziert, dadurch wird der Ausschuss sowie der Aufwand zur Kontrolle und Nacharbeit verringert.

Das Gleitverhalten des Kolbens und/oder der Dichtelemente wird verbessert, die Reibung und Dichtspalte können reduziert und der Profiltraganteil wegen der verringerten Ra und Rz Werten zugleich erhöht, die Kolbenführung optimiert werden.

Durch die erhöhte Verschleißfestigkeit und verringerte Reibung wird eine unerwünschte Schwarz-Verfärbung von Druckmittel vermieden oder reduziert.

Eine besonders vorteilhafte Ausführungsform der Erfindung sieht vor, dass der Bohrungsabschnitt axial durch wenigstens zwei Radialnuten begrenzt ist und die Dichtelemente in den Radialnuten angeordnet sind, wodurch die zu bearbeitende Oberfläche und der Herstellaufwand reduziert werden.

Gemäß einer bevorzugten Weiterbildung der Erfindung weist der Hohlraum einen zweiten Bohrungsabschnitt mit dem Solldurchmesser auf, in dem ein axial verschiebbarer Schwimmkolben angeordnet ist, welcher die erste Druckkammer von einer zweiten Druckkammer trennt, in der Bremsdruck für einen zweiten Bremskreis erzeugt wird. Insbesondere kann das Aggregat als ein Hauptbremszylinder nach Tandem-Bauart ausgebildet sein, womit das erfindungsgemäße hydraulische Aggregat und das zugehörige Herstellverfahren problemlos bei meisten Kraftfahrzeugbremsanlagen eigesetzt werden kann.

Gemäß einer anderen Weiterbildung weist der Hohlraum in seinem axialen Verlauf, bevorzugt zwischen dem ersten Bohrungsabschnitt und dem zweiten Bohrungsabschnitt wenigstens einen Abschnitt mit einem gegenüber dem Solldurchmesser vergrößerten radialen Maß auf. Damit können die zu bearbeitende Oberfläche weiter reduziert und die Zirkulation des Druckmittels innerhalb des Hohlraums durch vergrößerte Durchflussquerschnitte erheblich verbessert werden. Ebenso kann dadurch das Innenvolumen von einer oder mehreren Druckkammern erhöht werden, ohne dass die axiale Gesamtlänge des Aggregats vergrößert werden muss.

Zur Optimierung des Herstellprozesses und Verbesserung der Oberflächenqualität der Bohrungsabschnitte wird der Hauptkörper erfindungsgemäß derart aus einer Aluminiumlegierung erzeug, dass zumindest im Bereich des Hohlraums außerhalb der Randschicht eine Werkstoffhärte von weniger als 45 HRC und eine Bruchdehnung von mehr als 5 % aufweist.

Gemäß einer bevorzugten erfindungsgemäßen Ausführung weist die Randschicht in radiale Richtung eine Dicke zwischen 10 µm und 20 µm auf, wodurch eine betriebsoptimale Verfestigung und Oberflächenglättung bei einem reduzierten Umformungsaufwand erreicht wird.

Für das optimierte Gleitverhalten des Zylinderkolbens und/oder Dichtelementen wird die Innenwandung zumindest in den Bohrungsabschnitten bevorzugt auf eine eine Rautiefe Rz < 1µm und eine Rauheit Ra < 1µm gebracht.

Mit Vorteil lässt sich das erfindungsgemäße Aggregat in weiteren Ausführungsformen beispielsweise als ein elektrohydraulisches Bremsgerät aber auch als ein Bremsgerät mit einer elektromechanischen Verstärkerstufe ausbilden, wodurch der Herstellaufwand und -kosten derartiger Bremsgeräte verringert werden.

Gemäß einer anderen erfindungsgemäßen Ausführungsform kann wenigstens ein dynamisch beanspruchtes Dichtungselement zum Abgleiten an der Innenwandung im Bohrungsabschnitt vorgesehen sein, wodurch die Abdichtung eines oder mehrerer verschiebbaren Kolben bedarfsgemäß auch durch an dem oder den Kolben angeordnete Dichtelemente erfolgen kann.

Die Erfindung beinhaltet des Weiteren ein vorteilhaftes Verfahren zur Herstellung der Bohrungsabschnitte in einem hydraulischen Aggregat.

Insbesondere sieht das erfindungsgemäße Verfahren vor, dass in einem ersten Prozessschritt der Hohlraum zumindest in Bohrungsabschnitten, welche zum Aufweisen des Solldurchmessers vorgesehen sind, mit einem Vorbohrdurchmesser vorgebohrt wird, der vorzugsweise zwischen 15 µm und 20 µm kleiner als der Solldurchmesser ist. Dabei wird bevorzugt ein Bohrwerkzeig und Bohrparameter gewählt, mit denen die Innenwandung in Bohrungsabschnitten nach einem einzigen Durchgang eine Rautiefe zwischen 3 µm und 10µm, vorzugsweise 5µm aufweist. Damit wird die Taktzeit reduziert, zudem können bereits vorhandenen Fertigungsanlagen für konventionelle Hauptbremszylinder kosteneffektiv verwendet werden.

Gemäß einem nächsten Prozessschritt des erfindungsgemäßen Verfahrens wird die Innenwandung der Bohrungsabschnitte in einem Durchgang unter Anbringung einer radial nach außen gerichteten Kraft mit einem Rollierwerkzeug umgeformt, bis die Innenwandung den Solldurchmessers aufweist und die Rautiefe sowie die Rauheit vorzugsweise unter 1 µm liegen.

Für einen besonders effizienten Umformprozess sieht die Erfindung dabei vor, dass die vorgesehene Rolliergeschwindigkeit weniger als 200 m/min beträgt und vorzugsweise in einem Bereich zwischen 100 m/min und 150m/min eingestellt ist, wobei die Vorschubgeschwindigkeit des Rollierwerkzeugs in einem Bereich zwischen 0,2 mm/U und 0,6 mm/U eingestellt ist.

Durch Anwendung des erfindungsgemäßen Verfahrens werden die Taktzeiten bei der Herstellung durch Verringerung der Prozessschritte erhöht, der Reinigungsbedarf und die Menge des eingesetzten Kühlschmierstoffs wird verringert, die Herstellung somit wirtschaftlicher gestaltet.

Das erfindungsgemäße Verfahren ist geeignet sowohl für Aggregate, bei denen ein Dichtelement an einer Innenwandung der Hohlraum abgleitet - beispielsweise Hauptbremszylinder nach einem Zentralventiltyp mit an den Kolben angeordneten Dichtringen, als auch für Aggregate, bei denen Dichtungselemente ortsfest in der Hohlraum verbleiben und der Kolben an denen abgleitet - beispielsweise den Hauptbremszylinder vom Typ Plunger.

Weitere Merkmale und Vorteile der Erfindung ergeben sich aus der nachfolgenden Beschreibung eines Ausführungsbeispiels und den Zeichnungen. Hierbei zeigt:
Fig.1 eine erfindungsgemäße Ausführungsform des Bremsgeräts in Längsschnitt.
Fig.2 eine vergrößerte und stark vereinfachte Schnittansicht eines Abschnitts der Innenwandung des Hohlraums im Bohrungsabschnitt gemäß Fig.1 nach dem Vorbohren.
Fig.3 Die Ansicht gemäß Fig.2 mit der versdichteten Randschicht.

### Fig.1

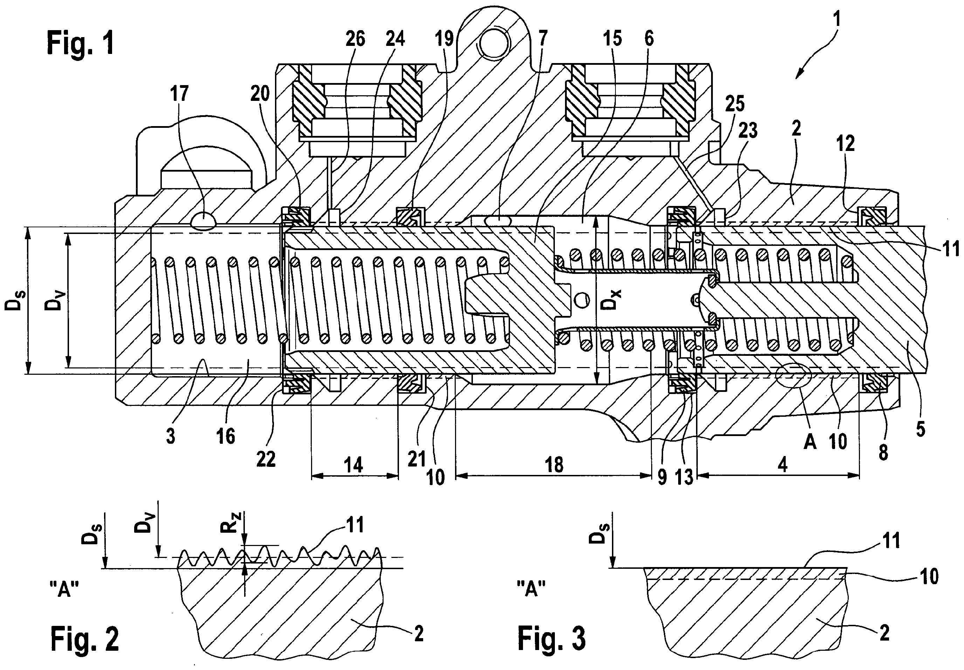

Fig.1 zeigt in Schnittdarstellung ein erfindungsgemäßes hydraulisches Aggregat 1 am Beispiel eines Tandem - Hauptbremszylinders nach Plunger-Bauart.

In dem Hauptkörper 2 aus einer Leichtmetalllegierung, vorzugsweise einer Aluminiumlegierung ist ein sackförmiger Hohlraum 3 angeordnet. Der Hohlraum 3 weist einen ersten Bohrungsabschnitt 4 und einen zweiten Bohrungsabschnitt 14 auf, die jeweils einen Solldurchmesser Ds aufweisen, der in diesem Ausführungsbeispiel zugleich den kleinsten Durchmesser im axialen Verlauf des Hohlraums 3 bildet.

Im Bereich des Bohrungsabschnitts 4 ist ein mechanisch betätigbarer Zylinderkolben 5 und im Bereich des Bohrungsabschnitts 14 ist ein Schwimmkolben 15, jeweils in axiale Richtung verschiebbar aufgenommen. Der Zylinderkolben 5 begrenzt eine mit einem hydraulischen Druckmittel gefüllte erste Druckkammer 6, die mit einem ersten Bremskreis 7 verbunden ist und der Schwimmkolben 15 trennt die Druckkammer 6 von einer zweiten, ebenfalls mit dem hydraulischen Druckmittel gefüllten Druckkammer 16, die mit einem zweiten Bremskreis 17 verbunden ist.

Der Bohrungsabschnitt 4 ist in axiale Richtung durch zwei Radialnuten 12,13 begrenzt, in denen dynamisch beanspruchte Dichtelemente 8,9 aufgenommen sind, welche zur Abdichtung gegen den Zylinderkolben 5 dienen. Analog dazu ist der Bohrungsabschnitt 14 zwischen Radialnuten 21,22 angeordnet, in denen Dichtelemente 19,20 zum Abdichten gegen den Schwimmkolben 15 aufgenommen sind.

In axiale Richtung zwischen den Bohrungsabschnitten 4 und 14 ist ein Abschnitt 18 vorgesehen, dessen radialer Maß Dx größer als der Solldurchmesser Ds ausgebildet ist.

Zwei in die Bohrungsabschnitte 4 und 14 öffnende und über Verbindungskanäle 25,26 mit einem nicht gezeigten Druckmittelbehälter verbundenen Nachlaufkanäle 23,24 versorgen die Druckkammern 6,16 mit dem hydraulischen Druckmittel.

Sowohl die an die Bohrungsabschnitte 4,14 angrenzenden Kanten der Radialnuten 12,13,21,22 als auch die Übergänge zum Abschnitt 18 sind dabei angefast oder verrundet ausgeführt.

Die Innenwandung 11 des Hohlraums 3 weist in den Bereichen der Bohrungsabschnitte 4 und 14 eine relativ dünne Randschicht 10 auf in der das Werkstoff des Hauptkörpers 2 verfestigt ist.

Die Tiefe beziehungsweise Dicke der Randschicht 10 in radiale Richtung liegt in einem Bereich zwischen 10 µm und 20 µm und beträgt vorzugsweise ca. 15 µm.

Die Verfestigung der Randschicht 10 wird als Kaltverfestigung durch einen Umformverfahren, insbesondere das Rollieren herbeigeführt. Hierfür wird der Hohlraum 3 in einem ersten Prozessschritt zumindest in axialen Abschnitten, welche die Bohrungsbereiche 4 und 14 einschließen, auf einen Vorbohrdurchmesser Dv gebracht, welcher definiert keiner als der endgültig für den Betrieb des Aggregats 1 vorgesehene Solldurchmesser Ds ist. Dies geschieht vorzugsweise in einem einzigen Arbeitsvorgang mit einem geeigneten Bohrwerkzeug, welcher die Oberfläche der Innenwandung 11 mit einer definierten Rautiefe Rz erzeugt.

### Fig.2

In der Fig.2 ist eine vergrößerte und stark vereinfachte Schnittansicht eines Abschnitts der Innenwandung 11 des Hohlraums 3 im Bohrungsabschnitt 4 gemäß Fig.1 nach dem Vorbohren gezeigt.

Für ein besonders effektives Endergebnis sollte konstruktiv und prozesstechnisch sichergestellt sein, dass der Werkstoff des Hauptkörpers 2 komplett oder zumindest in der unmittelbar an dem an dem Hohlraum 3 angrenzenden Bereich eine Rockwellhärte von kleiner als 45 HRC sowie die Bruchdehnung von über 5 % aufweist und grundsätzlich plastisch verformbar ist.

Die Oberfläche der Innenwandung 11 soll dabei eine gemittelte Rautiefe Rz aufweisen, die in einem Bereich zwischen 3 µm und 10 µm liegt. Vorzugsweise sollte die Rautiefe Rz etwa 5 µm aufweist, wobei der Vorbohrdurchmesser Dv dabei vorzugsweise ca. 20 µm kleiner als der Solldurchmesser gewählt wird.

### Fig.3

In einem nachfolgenden Prozessschritt wird die Innenwandung 11 mit einem nicht gezeigten Rollierwerkzeug, vorzugsweise in einem einzelnen Prozessschritt, radial nach außen ausgeweitet, bis der Solldurchmesser Ds erreicht ist. Die in der Fig.2 vereinfacht gezeigten, die Rautiefe Rz definierenden Unebenheiten der Oberfläche der Innenwandung 11 werden dabei aus ihrer bisherigen Lage radial nach außen verdrängt, so dass an der Innenwandung 11 sich eine Randschicht 10 ausbildet, in der das Werkstoff des Hauptkörpers 2 verdichtet und verfestigt ist. Dabei wird auch die Oberfläche der Innenwandung 11 signifikant geglättet wird weist beim Endprodukt sowohl eine Rautiefe Rz als auch eine Rauheit Ra vorzugsweise kleiner als 1 µm.

Für eine optimale Zielerreichung im Sinne der technischen Aufgabe erweist sich eine Dicke beziehungsweise Tiefe der Randschicht 10 in radiale Richtung in einem Bereich zwischen 10 µm und 20 µm und vorzugsweise 15 µm als besonders vorteilhaft. Diese Dicke kann insbesondere durch das Einhalten der vorstehend beschriebenen Parameter und Werkstoffeigenschaften besonders einfach erreicht werden.

Die Rolliergeschwindigkeit sollte dabei vorzugsweise zwischen 100 und 150 m/min betragen und die Vorschubgeschwindigkeit des Rollierwerkzeugs zwischen 0,2 mm/U und 0,6 mm/U.

### Bezugszeichenliste

- 1: Hydraulisches Aggregat
- 2: Hauptkörper
- 3: Hohlraum
- 4: Bohrungsabschnitt mit Ds
- 5: Zylinderkolben
- 6: Druckkammer
- 7: Bremskreis
- 8: Dichtelement
- 9: Dichtelement
- 10: Randschicht
- 11: Innenwandung
- 12: Radialnut
- 13: Radialnut
- 14: Bohrungsabschnitt mit Ds
- 15: Schwimmkolben
- 16: Druckkammer
- 17: Bremskreis
- 18: Abschnitt mit Dx
- 19: Dichtelement
- 20: Dichtelement
- 21: Radialnut
- 22: Radialnut
- 23: Nachlaufkanal
- 24: Nachlaufkanal
- 25: Verbindungskanal
- 26: Verbindungskanal
- Ds: Solldurchmesser
- Dv: Vorbohrdurchmesser
- Dx: Vergrößerter radialer Maß

## Patentansprüche

1. Hydraulisches Aggregat (1) zum Erzeugen von Bremsdruck für eine hydraulische Kraftfahrzeugbremsanlage, mit einem Hauptkörper (2), einem in dem Hauptkörper (2) angeordneten Hohlraum (3), der wenigstens einen ersten Bohrungsabschnitt (4) mit einem definierten Solldurchmesser (Ds) aufweist, in dem ein in axiale Richtung verschiebbarer Zylinderkolben (5) angeordnet ist, welcher in dem Hohlraum (3) wenigstens eine mit einem hydraulischen Druckmittel gefüllte Druckkammer (6) zur Erzeugung von Bremsdruck in einem Bremskreis (7) begrenzt, mit wenigstens einem ersten und einem zweiten Dichtelement (8,9) zur Abdichtung des Zylinderkolbens (5), die zueinander axial beanstandet angeordnet sind, **dadurch gekennzeichnet, dass** das Werkstoff des Hauptkörpers (2) in einer Randschicht (10) einer Innenwandung (11) des Hohlraums (3) im Bohrungsabschnitt (4) ein umformtechnisch verfestigtes Werkstoffgefüge aufweist.

2. Hydraulisches Aggregat (1) nach Anspruch 1 **dadurch gekennzeichnet, dass** der Bohrungsabschnitt (4) axial durch wenigstens zwei Radialnuten (12,13) begrenzt ist und die Dichtelemente (8,9) in den Radialnuten (12,13) angeordnet sind.

3. Hydraulisches Aggregat (1) nach Anspruch 1 **dadurch gekennzeichnet, dass** der Hohlraum (3) einen zweiten Bohrungsabschnitt (14) mit dem Solldurchmesser (Ds) aufweist, in dem ein axial verschiebbarer Schwimmkolben (15) angeordnet ist, welcher die erste Druckkammer (6) von einer zweiten Druckkammer (16) trennt, in der Bremsdruck für einen zweiten Bremskreis (17) erzeugt wird.

4. Hydraulisches Aggregat (1) nach Anspruch 1 **dadurch gekennzeichnet, dass** der Hohlraum (3) in seinem axialen Verlauf wenigstens einen Abschnitt (18) mit einem gegenüber dem Solldurchmesser (Ds) vergrößerten radialen Maß (Dx) aufweist.

5. Hydraulisches Aggregat (1) nach Ansprüchen 3 und 4 **dadurch gekennzeichnet, dass** der Abschnitt (18) in axiale Richtung zwischen dem ersten Bohrungsabschnitt (4) und dem zweiten Bohrungsabschnitt (14) angeordnet ist.

6. Hydraulisches Aggregat (1) nach Anspruch 1 **dadurch gekennzeichnet, dass** der Hauptkörper (2) aus einer Aluminiumlegierung erzeugt ist, welche zumindest im Bereich des Hohlraums (3) außerhalb der Randschicht (10) eine Werkstoffhärte von weniger als 45 HRC (Rockwellhärte) und eine Bruchdehnung von mehr als 5 % aufweist.

7. Hydraulisches Aggregat (1) nach Anspruch 1 **dadurch gekennzeichnet, dass** die Randschicht (10) in radiale Richtung eine Dicke zwischen 10 µm und 20 µm aufweist.

8. Hydraulisches Aggregat (1) nach einem der vorangegangenen Ansprüche **dadurch gekennzeichnet, dass** die Innenwandung (11) zumindest in den Bohrungsabschnitten (8,9) unbeschichtet ist.

9. Hydraulisches Aggregat (1) nach einem der vorangegangenen Ansprüche **dadurch gekennzeichnet, dass** die Innenwandung (11) zumindest in den Bohrungsabschnitten (4,14) eine Rautiefe Rz < 1 µm und eine Rauheit Ra < 1 µm aufweist.

10. Hydraulisches Aggregat (1) nach einem der vorangegangenen Ansprüche **dadurch gekennzeichnet, dass** das Aggregat (1) als ein Hauptbremszylinder nach Tandem-Bauart ausgebildet ist.

11. Hydraulisches Aggregat (1) nach einem der vorangegangenen Ansprüche **dadurch gekennzeichnet, dass** das Aggregat (1) als ein elektrohydraulisches Bremsgerät ausgebildet ist.

12. Hydraulisches Aggregat (1) nach einem der vorangegangenen Ansprüche **dadurch gekennzeichnet, dass** das Aggregat (1) als ein Bremsgerät mit einer elektromechanischen Verstärkerstufe ausgebildet ist.

13. Hydraulisches Aggregat (1) nach einem der vorangegangenen Ansprüche **dadurch gekennzeichnet, dass** wenigstens ein dynamisch beanspruchtes Dichtungselement zum Abgleiten an der Innenwandung (11) im Bohrungsabschnitt (4) vorgesehen ist.

14. Hydraulisches Aggregat (1) nach einem der vorangegangenen Ansprüche **dadurch gekennzeichnet, dass** der Zylinderkolben (5) zur Erzeugung von Bremsdruck mechanisch betätigbar ausgebildet ist.

15. Verfahren zur Herstellung der Bohrungsabschnitte (4) oder (4 und 14) in einem hydraulischen Aggregat (1) nach einem der vorangegangenen Ansprüche, **durch folgende Schritte gekennzeichnet:**
- Vorbohren des Hohlraums (3) mit einem Vorbohrdurchmesser (Dv) in Bohrungsabschnitten (4,14), welche zum Aufweisen des Solldurchmessers (DS) vorgesehen sind, wobei der Vorbohrdurchmesser (Dv) vorzugsweise zwischen 15pm und 20pm kleiner als der Solldurchmessers (Ds) ist und die Innenwandung (11) in Bohrungsabschnitten (4,14) nach dem Vorbohren eine Rautiefe zwischen 3 µm < Rz < 10 µm, vorzugsweise Rz ≈ 5 µm aufweist.
- Umformen der Innenwandung (5) der Bohrungsabschnitte (4,14) in einem Durchgang unter Anbringung einer radial nach außen gerichteten Kraft mit einem Rollierwerkzeug, bis die Innenwandung (11) den Solldurchmessers (Ds) aufweist, die Rautiefe Rz < 1 µm beträgt die Rauheit Ra < 1 µm ist

16. Verfahren nach Anspruch 15 **dadurch gekennzeichnet, dass** die eingestellte Rolliergeschwindigkeit weniger als 200 m/min beträgt und vorzugsweise in einem Bereich zwischen 100 m/min und 150 m/min eingestellt ist, wobei die Vorschubgeschwindigkeit des Rollierwerkzeugs in einem Bereich zwischen 0,2 mm/U und 0,6 mm/U eingestellt ist.

## Claims

1. Hydraulic assembly (1) for generating brake pressure for a hydraulic motor vehicle brake system, comprising a main body (2), comprising a cavity (3) which is arranged in the main body (2) and which has at least a first bore portion (4) which has a defined target diameter (Ds) and in which there is arranged a cylinder piston (5) which is displaceable in the axial direction and which, in the cavity (3), delimits at least one pressure chamber (6) which is filled with a hydraulic pressure medium and which serves for generating brake pressure in a brake circuit (7), comprising at least one first and one second sealing element (8,9) which serve for sealing off the cylinder piston (5) and which are arranged axially spaced apart from one another, **characterized in that** the material of the main body (2) has in an edge layer (10) of an inner wall (11) of the cavity (3) in the bore portion (4) a material structure which has been hardened by deformation.

2. Hydraulic assembly (1) according to Claim 1 **characterized in that** the bore portion (4) is delimited axially by at least two radial grooves (12,13), and the sealing elements (8,9) are arranged in the radial grooves (12,13).

3. Hydraulic assembly (1) according to Claim 1 **characterized in that** the cavity (3) has a second bore portion (14) which has the target diameter (Ds) and in which there is arranged a floating piston (15) which is displaceable axially and which separates the first pressure chamber (6) from a second pressure chamber (16) in which brake pressure for a second brake circuit (17) is generated.

4. Hydraulic assembly (1) according to Claim 1 **characterized in that** the cavity (3) has in its axial profile at least one portion (18) with a radial dimension (Dx) which is enlarged in comparison with the target diameter (Ds).

5. Hydraulic assembly (1) according to Claims 3 and 4 **characterized in that** the portion (18) is arranged between the first bore portion (4) and the second bore portion (14) in the axial direction.

6. Hydraulic assembly (1) according to Claim 1 **characterized in that** the main body (2) is made from an aluminum alloy which has, at least in the region of the cavity (3) outside the edge layer (10), a material hardness of less than 45 HRC (Rockwell hardness) and an elongation at break of more than 5%.

7. Hydraulic assembly (1) according to Claim 1 **characterized in that** the edge layer (10) has a thickness between 10 µm and 20 µm in the radial direction.

8. Hydraulic assembly (1) according to one of the preceding claims **characterized in that** the inner wall (11) is uncoated at least in the bore portions (8,9).

9. Hydraulic assembly (1) according to one of the preceding claims **characterized in that** the inner wall (11) has a roughness depth Rz < 1 µm and a roughness Ra < 1 µm at least in the bore portions (4,14).

10. Hydraulic assembly (1) according to one of the preceding claims **characterized in that** the assembly (1) is designed as a tandem-type master brake cylinder.

11. Hydraulic assembly (1) according to one of the preceding claims **characterized in that** the assembly (1) is designed as an electrohydraulic brake unit.

12. Hydraulic assembly (1) according to one of the preceding claims **characterized in that** the assembly (1) is designed as a brake unit having an electromechanical boosting stage.

13. Hydraulic assembly (1) according to one of the preceding claims **characterized in that** at least one dynamically stressed sealing element for sliding on the inner wall (11) in the bore portion (4) is provided.

14. Hydraulic assembly (1) according to one of the preceding claims **characterized in that** the cylinder piston (5) for generating brake pressure is formed to be mechanically actuable.

15. Method for producing the bore portions (4) or (4 and 14) in a hydraulic assembly (1) according to one of the preceding claims **characterized by the following steps:**
- pre-drilling the cavity (3) with a pre-drilling diameter (Dv) in bore portions (4,14) which are provided for having the target diameter (DS), wherein the pre-drilling diameter (Dv) is preferably smaller than the target diameter (Ds) by between 15 µm and 20 µm, and the inner wall (11) in bore portions (4,14) has a roughness depth between 3 µm < Rz < 10 µm, preferably Rz ≈ 5 µm, after the pre-drilling.
- deforming the inner wall (5) of the bore portions (4,14) in one pass with the application of a radially outwardly directed force using a roller-burnishing tool until the inner wall (11) has the target diameter (Ds), the roughness depth Rz < 1 µm, the roughness Ra < 1 µm.

16. Method according to Claim 15 **characterized in that** the set roller-burnishing speed is less than 200 m/min and is preferably set in a range between 100 m/min and 150 m/min, wherein the feed speed of the roller-burnishing tool is set in a range between 0.2 mm/rev and 0.6 mm/rev.

## Revendications

1. Groupe hydraulique (1) pour la génération de pression de freinage pour une installation de frein hydraulique d'un véhicule automobile, avec un corps principal (2), une cavité (3) disposée dans le corps principal (2), qui présente au moins une première portion d'alésage (4) avec un diamètre de consigne défini (Ds), dans laquelle est disposé un piston de cylindre (5) déplaçable dans la direction axiale, lequel limite dans la cavité (3) au moins une chambre de pression (6) remplie d'un fluide de pression hydraulique pour générer la pression de freinage dans un circuit de frein (7), avec au moins un premier et un deuxième élément d'étanchéité (8, 9) pour l'étanchéité du piston de cylindre (5), lesquels sont disposés à distance axiale l'un de l'autre, **caractérisé en ce que** le matériau du corps principal (2) présente dans une couche marginale (10) d'une paroi intérieure (11) de la cavité (3), dans la portion d'alésage (4), une structure de matériau solidifiée par une technique de façonnage.

2. Groupe hydraulique (1) selon la revendication 1, **caractérisé en ce que** la portion d'alésage (4) est limitée axialement par au moins deux rainures radiales (12, 13) et les éléments d'étanchéité (8, 9) sont disposés dans les rainures radiales (12, 13).

3. Groupe hydraulique (1) selon la revendication 1, **caractérisé en ce que** la cavité (3) présente une deuxième portion d'alésage (14) ayant le diamètre de consigne (Ds), dans laquelle est disposé un piston flottant (15) déplaçable axialement qui sépare la première chambre de pression (6) d'une deuxième chambre de pression (16) dans laquelle est générée la pression de freinage pour un deuxième circuit de frein (17).

4. Groupe hydraulique (1) selon la revendication 1, **caractérisé en ce que** la cavité (3) présente dans son étendue axiale au moins une portion (18) ayant une dimension radiale (Dx) agrandie par rapport au diamètre de consigne (Ds).

5. Groupe hydraulique (1) selon les revendications 3 et 4, **caractérisé en ce que** la portion (18) est disposée dans la direction axiale entre la première portion d'alésage (4) et la deuxième portion d'alésage (14).

6. Groupe hydraulique (1) selon la revendication 1, **caractérisé en ce que** le corps principal (2) est fabriqué à partir d'un alliage d'aluminium qui présente, au moins dans la région de la cavité (3), à l'extérieur de la couche marginale (10), une dureté de matériau inférieure à 45 HRC (dureté Rockwell) et un allongement à la rupture supérieur à 5 %.

7. Groupe hydraulique (1) selon la revendication 1, **caractérisé en ce que** la couche marginale (10) présente, dans la direction radiale, une épaisseur comprise entre 10 µm et 20 µm.

8. Groupe hydraulique (1) selon l'une quelconque des revendications précédentes, **caractérisé en ce que** la paroi intérieure (11), au moins dans les portions d'alésage (8, 9) n'est pas revêtue.

9. Groupe hydraulique (1) selon l'une quelconque des revendications précédentes, **caractérisé en ce que** la paroi intérieure (11), au moins dans les portions d'alésage (4, 14), présente une rugosité de surface Rz < 1 µm et une rugosité Ra < 1 µm.

10. Groupe hydraulique (1) selon l'une quelconque des revendications précédentes, **caractérisé en ce que** le groupe (1) est réalisé sous la forme d'un cylindre de frein principal de construction en tandem.

11. Groupe hydraulique (1) selon l'une quelconque des revendications précédentes, **caractérisé en ce que** le groupe (1) réalisé sous la forme d'un appareil de freinage électrohydraulique.

12. Groupe hydraulique (1) selon l'une quelconque des revendications précédentes, **caractérisé en ce que** le groupe (1) est réalisé sous forme d'appareil de freinage avec un étage d'amplificateur électromécanique.

13. Groupe hydraulique (1) selon l'une quelconque des revendications précédentes, **caractérisé en ce qu'**au moins un élément d'étanchéité sollicité dynamiquement est prévu pour glisser sur la paroi intérieure (11) dans la portion d'alésage (4).

14. Groupe hydraulique (1) selon l'une quelconque des revendications précédentes, **caractérisé en ce que** le piston de cylindre (5) est réalisé de manière à pouvoir être actionné mécaniquement pour générer la pression de freinage.

15. Procédé de fabrication des portions d'alésage (4) ou (4 et 14) dans un groupe hydraulique (1) selon l'une quelconque des revendications précédentes, **caractérisé par les étapes suivantes :**
- préperçage de la cavité (3) avec un diamètre de préperçage (Dv) dans des portions d'alésage (4, 14) qui sont prévues pour présenter le diamètre de consigne (Ds), le diamètre de préperçage (Dv) étant de préférence inférieur d'entre 15 µm et 20 µm au diamètre de consigne (Ds) et la paroi intérieure (11) dans les portions d'alésage (4, 14) après le préperçage présentant une rugosité de surface de 3 µm < Rz < 10 µm, de préférence Rz ≈ 5 µm,
- façonnage de la paroi intérieure (5) des portions d'alésage (4, 14) dans un passage en appliquant une force orientée radialement vers l'extérieur avec un outil de roulage jusqu'à ce que la paroi intérieure (11) présente le diamètre de consigne (Ds), que la rugosité de surface Rz soit < 1 µm et que la rugosité Ra soit < 1 µm.

16. Procédé selon la revendication 15, **caractérisé en ce que** la vitesse de roulage ajustée est inférieure à 200 m/min et de préférence est ajustée dans une plage comprise entre 100 m/min et 150 m/min, la vitesse d'avance de l'outil de roulage étant ajustée dans une plage comprise entre 0,2 mm/tr et 0,6 mm/tr.
